Europäisches Patentamt

European Patent Office

Office européen des brevets

(11) Publication number: **0 269 124 B1**

# EUROPEAN PATENT SPECIFICATION

(45) Date of publication of patent specification: **23.10.91**

(51) Int. Cl.⁵: **B65G 65/48**, B65D 88/68, D21C 9/10

(21) Application number: **87117593.1**

(22) Date of filing: **27.11.87**

(54) **High-consistency pulp tower for discharging said pulp.**

(30) Priority: **28.11.86 FI 864848**
**28.11.86 FI 864849**

(43) Date of publication of application:
**01.06.88 Bulletin 88/22**

(45) Publication of the grant of the patent:
**23.10.91 Bulletin 91/43**

(84) Designated Contracting States:
**AT DE FR GB SE**

(56) References cited:
**US-A- 1 924 860**
**US-A- 3 348 390**
**US-A- 4 105 494**

(73) Proprietor: **A. AHLSTROM CORPORATION**

**SF-29600 Noormarkku(FI)**

(72) Inventor: **Henricson, Kaj**
**Eteläpuistokatu 2**
**SF-48100 Kotka(FI)**
Inventor: **Rönkönharju, Hannu**
**Lemminkäisenkatu 20**
**SF-48700 Kyminlinna(FI)**

(74) Representative: **Görg, Klaus, Dipl.-Ing. et al**
**Hoffmann, Eitle & Partner Arabellastrasse 4**
**(Sternhaus)**
**W-8000 München 81(DE)**

## Description

The invention relates to a high-consistency pulp tower according to the precharacterizing part of claim 1 and a method of discharging pulp from the tower. Such a tower is well known from the US-A-4 105 494, which discloses a method of discharging pulp at a consistency range of 1 - 12 % in peripheral and radial direction by transport elements in the bottom portion of the tower, with dilution of said transfer. The present invention relates further to a high-consistency pulp tower comprising a fluidizing discharge device disposed in the outlet for the pulp.

In a conventional high-consistency pulp tower the pulp is diluted in the lower part of the tower provided with a mixer and is discharged from the tower at a consistency of 2 to 5 % by means of an ordinary pump.

In a tower provided with a fluidizing discharge device the pulp need not be diluted or it is diluted to a consistency of 8 to 16 % if it has been supplied to the tower in a higher consistency.

The range of the fluidizing rotor provided at the bottom of the tower is, however, small, considerably smaller than the diameter of the tower which may be 10 to 15m. Thus pulp can stay in some parts of the bottom of the tower for long periods which results in that the pulp may be spoiled and may build vaults around the outlet.

From the US-A-1924860 it is known to introduce water through nozzles being provided on the scraper arms into the pulp against the flow of the pulp.

These above mentioned problems are solved by a pulp tower according to claim 1.

Pulp is discharged from the tower at a consistency range of 8 - 16 % and is kept flowing in the bottom portion of the tower by transport elements which feed pulp towards an outlet or several outlets and transfer the pulp both in peripheral and in radial direction.

By this solution all the pulp can be fed to the outlet in an improved manner even when the pulp has a consistency of 8 to 16 %.

Further relevant features of the invention are described in the subclaims.

The invention is described closer below, by way of example, with reference to the accompanying drawings in which

Fig. 1   is a vertical section of an embodiment of a pulp tower according to the invention;

Fig. 2   is a horizontal section along line A-A in Fig. 1;

Fig. 3   is a vertical section of an embodiment of a pulp tower according to the invention;

Fig. 4   is a horizontal section along line A-A in Fig. 3 and

Fig. 5   is an enlarged illustration of area B in Fig. 3.

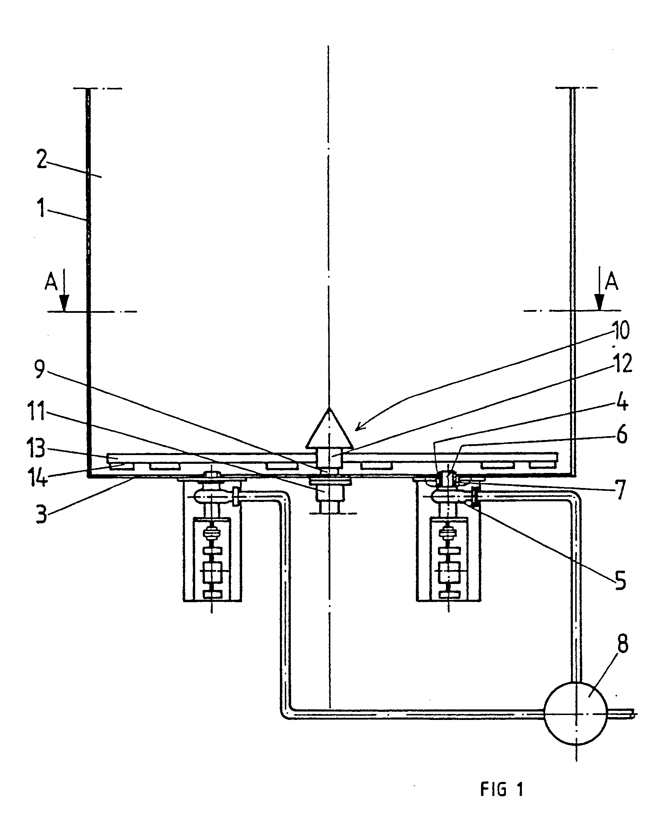

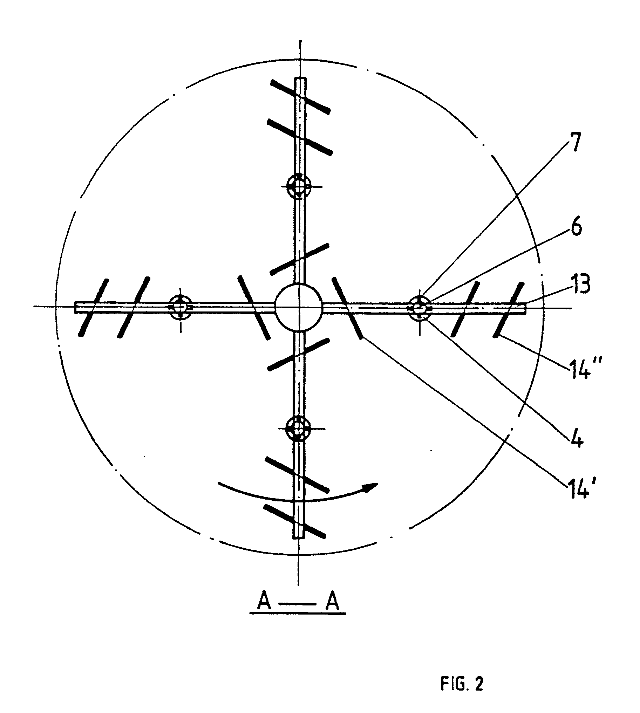

Figures 1 and 2 illustrate a high-consistency pulp tower 1 comprising a cylindrical wall 2 and a flat bottom 3. There are four outlets 4 disposed symmetrically in the bottom.

Each outlet is provided with a fluidizing rotor 6 of a fluidizing pump 5 provided under the outlets, as disclosed in FI 781071. The rotor extends through the inlet channel of the pump and inside the tower. The rotor is provided with ribs 7 which during rotation of the rotor subject the pulp at the outlet 4 to shear forces which fluidize the pulp and cause it to flow, due to the force of gravity, to the impeller of the pump provided under the outlet which impeller transports the pulp discharged from the tower further to an apparatus 8 uniting the discharge flows. An apparatus for uniting the flows in a fluidized state as disclosed in the FI application is preferably employed in uniting the flows. Another alternative is to arrange a so-called drop leg for each outlet 4 to the lower end of which the pump 5 is provided. Other parts of the structure are similar to the ones described above.

Each pump 5 is provided with its own drive the number of revolutions and thus the volume flow of which is adjustable. By discharging different volumes of pulp through the outlets the downwards flow of the pulp can be adjusted differently at different locations of the tower.

The bottom of the tower is preferably equipped with a bottom scraper 10 fixed to a shaft 9 which is coaxial with the tower. The shaft passes through the bottom and is journalled in a bearing housing 11 outside the tower.

The bottom scraper comprises a hub 12 fixed to the upper end of the shaft, arms 13 extending from the hub, and scraper plates 14 fixed to the arms in an inclined position in relation to the direction of their movement. The scraper plates wipe the bottom of the tower or move close to it when the bottom scraper rotates.

When the bottom scraper 10 rotates the scraper plates 14 move the pulp at the bottom. As the plates are inclined the motion of the pulp along the bottom of the tower has a feeding component in the direction of the radius. The inclination of the scraper plates 14' between the vertical shaft 9 and the outlet 4 is chosen so as to direct the pulp from the center outwards. The inclination of the scraper plates 14″ located in the area outwards from the outlet is opposite; therefore the pulp moves from the edges towards the center. In this way new pulp always flows towards the outlet when the fluidized pulp runs out from the tower. This arrangement quarantees that the pulp in the tower is in constant motion.

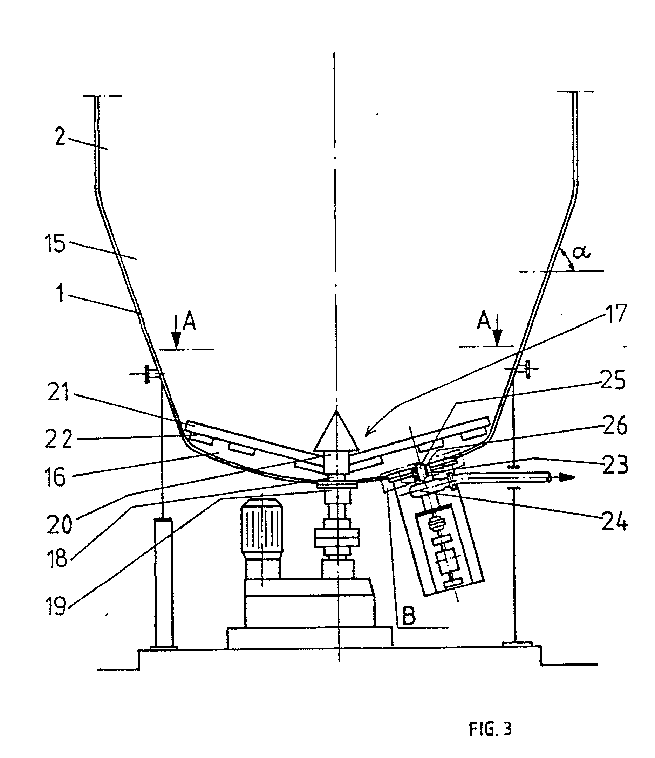

Figures 3, 4 and 5 illustrate a high-consistency pulp tower 1 comprising a cylindrical upper portion 2, a conical lower portion 15 and a rounded bottom portion 16. The bottom portion 16 is provided with a bottom scraper 17 disposed on a shaft 18 which is coaxial with the tower. The shaft extends through the bottom of the tower and is journalled in a bearing housing 19 outside the tower.

The bottom scraper comprises a hub 20 connected to the top end of the shaft; arms 21 connected to the hub; and scraper plates 22 connected to the arms in an inclined position in relation to the direction of their movement, which during rotation of the bottom scraper wipe the surface of the bottom or move close to it.

Outlet 23 for discharge of the pulp is located at a distance from the shaft 18. A fluidizing rotor 25 of a fluidizing pump 24 under the outlet is disposed in the outlet, as disclosed in FI 781071. The rotor extends through the inlet channel of the pump and inside the tower. The rotor is provided with ribs 26 which during rotation of the rotor subject the pulp at the outlet 23 to shear forces which fluidize the pulp and the force of gravity causes the pulp to flow out of the tower to the impeller of the pump provided under the outlet which impeller transports the pulp discharged from the tower further. The tower may have several outlets. A so-called drop leg may also be provided for each outlet; the pump is then connected to the lower end of the drop leg.

When the bottom scraper rotates the scraper plates 22 move the pulp in the bottom portion. As the plates are inclined the motion of the pulp along the bottom of the tower has a feeding component in the direction of the radius. The inclination of the scraper plates 22' between the vertical shaft 18 and the outlet 23 is chosen so as to direct the pulp from the center outwards. The inclination of the scraper plates 22" located outwards from the outlet is opposite; therefore the pulp moves from the edges towards the center. In this way new pulp always flows towards the outlet when the fluidized pulps runs out from the tower. This arrangement guarantees an even flow downwards over the whole cross section of the tower just like described in connection with Figs. 1 and 2.

Due to the conical bottom portion of the tower the bottom portion and the bottom scraper can be made smaller than the cylindrical portion of the tower. The angle α of inclination of the wall in the conical portion has to be wide, for instance 70 - 80 degrees, so as not to hinder the pulp from moving. Further, a conical bottom portion is easy to install to replace an existing flat bottom of a pulp tower of for example the type illustrated in Figs. 1 and 2. Thus also existing pulp towers can be modified to utilize the new discharge method.

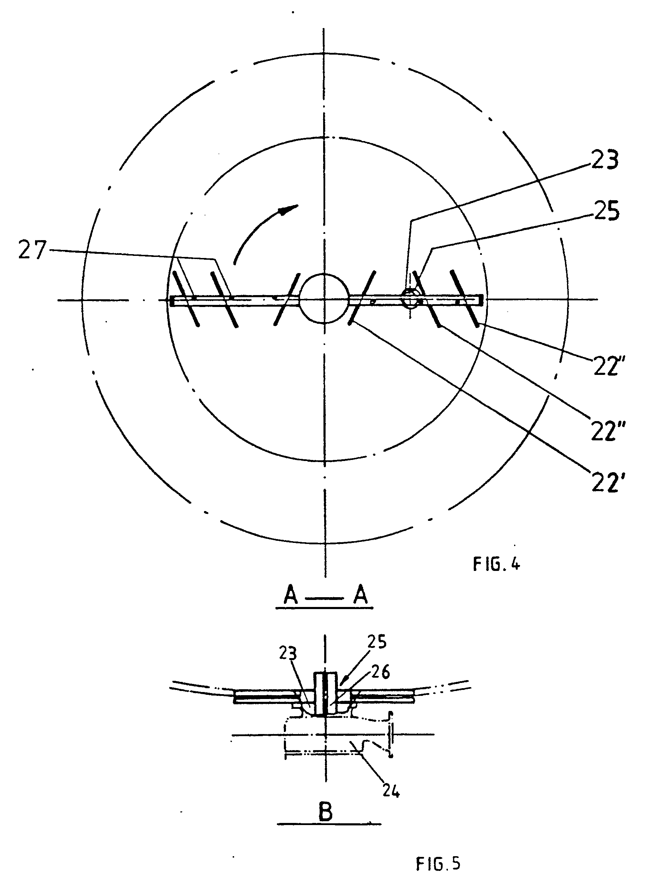

The method of discharging pulp from a high-consistency pulp tower can be applied in the consistency range of 8 - 16 %. At lower consistencies the pulp moves easily and is therefore simple to discharge. The consistency in the pulp tower itself can be 20 - 25 %. Diluting liquid is supplied through nozzles (27, Fig. 4) to the tower close to the bottom scraper in order to drop the consistency to 8-16 %. The nozzles 27 for the diluting liquid are preferably disposed in the bottom scraper in which case diluting liquid is supplied to the pulp through the shaft of the scraper and the scraper itself. The most advantageous location of the nozzles or the dilution holes 27 has proved to be the top surface of the arm 21 of the scraper or another corresponding surface, through which the liquid is supplied to the pulp against the flow direction of the pulp. This is done in order to provide a kind of a lubricating surface between the scraper and the pulp whereby the scraper moves more easily in the pulp. The energy consumption of the scraper is smallest when diluting liquid is supplied both onto the top and the leading surface of the scraper, i.e. the pulp is diluted both on top of the scraper and in front of it. This is realized best by providing liquid nozzles 27 for the dilution which are directed obliquely forwards.

The invention is not limited to the embodiments presented here as examples only but various modifications and applications of it are possible within the scope of protection defined by the accompanying patent claims in which the reference numerals do not restrict the scope of protection.

## Claims

1.  A high-consistency pulp tower, comprising at least one rotating means (10, 17, 31) provided with transport elements (14, 22, 32) for feeding pulp towards one or several outlets (4, 23) located in the bottom wall of the tower, wherein the rotating transport elements are composed of arms (14, 21) rotating around a vertical shaft (9, 18), the arms extending outwards from the shaft and being provided with scraper plates (14, 22) disposed in an inclined position in relation to the direction of their movement and wiping the surface of the bottom (3, 16) or moving close to the said surface,

    **characterized** in that in the area between the vertical shaft (9, 18) of the rotating means and the outlet(s) (4, 23) scraper plates (14', 22') are provided for feeding the pulp from the center outwards; and in the area outwards from the outlet(s), scraper plates (14", 22") are provided which feed pulp from the edges towards the center.

**2.** A high-consistency pulp tower as claimed in claim 1,

**characterized** in that

there are feed means (27) for dilution liquid disposed in the arms (21) in such a way that the feed of the dilution liquid takes place against the flow direction of the pulp.

**3.** A high-consistency pulp tower as claimed in claim 2,

**characterized** in that

the feed means (27), i.e. holes or nozzles, are located in the top surface of the arms (21).

**4.** A high-consistency pulp tower as claimed in claims 1 to 3

**characterized** by

two or more fluidizing discharge means (5, 6, 25, 26) which are disposed in the outlets (4, 23) of the tower or in drop legs connected to the said outlets, and the flow rate of which is regulable.

**5.** A high-consistency pulp tower as recited in claim 1,

**characterized** in that

the outlets (4, 23) are located each at a same distance from the vertical shaft (9, 18, 33).

**6.** A high-consistency pulp tower as recited in claim 1,

**characterized** in that

the rotating element (10, 17, 31) is coaxial with the tower (1).

**7.** A high-consistency pulp tower as claimed in any of claims 1 and 4,

**characterized** in that

the bottom portion (16) of the tower is rounded and connected to the cylindrical upper portion (2) of the tower through a tower portion (15) having the shape of a truncated cone.

**8.** A high-consistency pulp tower as claimed in any of claims 1 and 6,

**characterized** in that

the diameter of the rotating element (17, 31) is considerably smaller than the diameter of the cylindrical portion (2) of the tower.

**Revendications**

**1.** Tour à pulpe de consistance élevée, comprenant au moins un moyen de rotation (10,17,31) équipé d'élément de transport (14,22,32) pour faire avancer la pulpe vers un ou plusieurs orifices de sortie (4, 23) situés dans la paroi de fond de la tour, dans laquelle les éléments de transport tournants sont composés de bras (14,21) tournant autour d'un arbre vertical (9,18), les bras s'étendant à partir de l'arbre vers l'extérieur et étant munis de plaques racleuses (14, 22) disposées selon une position inclinée par rapport à la direction de leur mouvement et balayant la surface du fond (3,16) ou se déplaçant très près de ladite surface,

caractérisée en ce que dans la zone entre l'arbre vertical (9,18) du moyen de rotation et l'(les) orifice(s) de sortie (4,23) des plaques racleuses (14', 22') sont prévues pour faire avancer la pulpe du centre vers l'extérieur ; et dans la zone située vers l'extérieur à partir de l'orifice (des orifices) de sortie, des plaques racleuses (14" 22") sont prévues lesquelles conduisent la pulpe à aller des bords vers le centre.

**2.** Tour à pulpe de consistance élevée selon la revendication 1, caractérisée en ce que

il existe des moyens d'alimentation (27) pour un liquide de dilution disposés dans les bras (21) de façon telle que l'alimentation en liquide de dilution se produise contre la direction de l'écoulement de la pulpe.

**3.** Tour à pulpe de consistance élevée selon la revendication 2, caractérisée en ce que

les moyens d'alimentation (27), c'est à dire des trous ou des diffuseurs, sont situés dans la surface de dessus des bras (21).

**4.** Tour à pulpe de consistance élevée selon les revendications 1 à 3, caractérisée par

deux moyens , ou plus, de décharge à fluidification (5,6,25,26) qui sont disposés dans les orifices de sortie (4,23) de la tour ou dans les colonnes barométriques reliées auxdits orifices de sortie, et dont la vitesse d'écoulement est réglable.

**5.** Tour à pulpe de consistance élevée selon la revendication 1, caractérisée en ce que

les orifices de sortie (4,23) sont situés chacun à une même distance de l'arbre vertical (9, 18, 33).

**6.** Tour à pulpe de consistance élevée selon la revendication 1, caractérisée en ce que

l'élément de rotation (10,17,31) est coaxial avec la tour (1).

**7.** Tour à pulpe de consistance élevée selon l'une quelconque des revendications 1 et 4, caractérisée en ce que

la partie fond (16) de la tour est entourée et connectée à la partie supérieure cylindrique (2) de la tour par une partie de tour (15) ayant la forme d'un cône tronqué.

8. Tour à pulpe de consistance élevée selon l'une quelconque des revendications 1 et 6, caractérisée en ce que

le diamètre de l'élément de rotation (17,31) est considérablement plus petit que le diamètre de la partie cylindrique (2) de la tour.

## Patentansprüche

1. Ein hochkonsistenter Stoffturm, bestehend mindestens aus einer rotierenden Vorrichtung (10, 17, 31), die mit Transportelementen (14, 22, 32) versehen ist zur Eingabe von Pulpe zu einem oder mehreren Austrittsöffnungen (4, 23) hin, angeordnet in der Bodenwand des Turms, wobei sich die rotierenden Transportelemente aus Armen (14, 21) zusammensetzen, die sich um eine vertikale Welle (9, 18) drehen, die Arme sich auswärts von der Welle erstrecken und mit Schabplatten (14, 22) versehen sind, die in einer geneigten Stellung gegenüber ihrer Bewegungsrichtung angeordnet sind und die Oberfläche des Bodens (3, 16) streifen oder sich dicht daran bewegen, dadurch gekennzeichnet, daß im Bereich zwischen der vertikalen Welle (9, 18) der rotierenden Vorrichtung und dem (den) Austritt(en) (4, 23), Schabplatten (14', 22') zur Beförderung der Pulpe auswärts vom Zentrum vorgesehen sind; und im Bereich auswärts von dem (den) Austritt(en) Schabplatten (14", 22") vorgesehen sind, die Pulpe von den Rändern zum Zentrum hin befördern.

2. Ein hochkonsistenter Stoffturm gemäß Anspruch 1, dadurch gekennzeichnet, daß Eingabevorrichtungen (27) zur Verdünnung von Flüssigkeit in solcher Weise in den Armen (21) angeordnet sind, daß die Eingabe von Verdünnungsflüssigkeit gegen der Strömungsrichtung von Pulpe stattfindet.

3. Ein hochkonsistenter Stoffturm gemäß Anspruch 2, dadurch gekennzeichnet, daß die Eingabevorrichtungen (27), d.h. die Öffnungen oder Düsen auf der Oberseite der Arme (21) positioniert sind.

4. Ein hochkonsistenter Stoffturm gemäß Anspruch 1 bis 3, gekennzeichnet durch zwei oder mehrere fluidisierende Austragsvorrichtungen (5, 6, 25, 26), die in den Austritten (4, 23) des Turms oder in den mit den genannten Austritten verbundenen Fallrohren angeordnet sind, und deren Strömungsgeschwindigkeit verstellbar ist.

5. Ein hochkonsistenter Stoffturm gemäß Anspruch 1, dadurch gekennzeichnet, daß die Austritte (4, 23) jeweils im selben Abstand von der vertikalen Welle (9, 18, 33) angeordnet sind.

6. Ein hochkonsistenter Stoffturm gemäß Anspruch 1, dadurch gekennzeichnet, daß das rotierende Element (10, 17, 31) koaxial mit dem Turm (1) ist.

7. Ein hochkonsistenter Stoffturm gemäß einem der Ansprüche 1 bis 4, dadurch gekennzeichnet, daß der Bodenabschnitt (16) des Turms abgerundet ist und mit dem zylindrischen oberen Teil (2) des Turm über einen Turmabschnitt (15) verbunden ist, der die Form eines Stumpfkegels hat.

8. Ein hochkonsistenter Stoffturm gemäß einem der Ansprüche 1 bis 6, dadurch gekennzeichnet, daß der Durchmesser des rotierenden Elements (17, 31) erheblich kleiner ist als der Durchmesser des zylindrischen Abschnittes des Turms (2).

FIG 1

A — A

FIG. 2

FIG. 3

FIG. 4

A — A

B

FIG. 5